# EUROPEAN PATENT APPLICATION

(11) **EP 3 754 452 A1**
(43) Date of publication of application: **23.12.2020**
(21) Application number: 20180767.4
(22) Date of filing: 18.06.2020
(51) Int. Cl.: G05D 9/12, B64D 11/00

(54) **ENHANCED POTABLE WATER SYSTEM**

(30) Priority: 19.06.2019 IN 201911024381
(71) Applicant: Goodrich Corporation, Charlotte, NC 28217-4578 (US)
(72) Inventor: GOYAL, Nitin Kumar, 560037 Bangalore (IN); JHA, Ashutosh Kumar, 560067 Bangalore (IN); PATIL, Rhushikesh, 560043 Bangalore (IN)
(74) Representative: Dehns

(57) **Abstract**

Systems and methods for operating a potable water system (42) in an aircraft (2) are provided. Aspects include determining, by a controller (202), flight data associated with a flight for the aircraft, determining passenger data associated with the flight, determining an estimated water consumption for the potable water system associated with the aircraft based on the passenger data, determining a water quantity value for the flight based at least in part on the flight data and the estimated water consumption, and transmitting, by the controller, a request for the water quantity value for the potable water system for the flight to a water fulfillment system.

## Description

### CROSS-REFERENCE TO RELATED APPLICATIONS

This application claims the benefit of Indian Patent Application number 201911024381 filed June 19, 2019.

### BACKGROUND

Exemplary embodiments pertain to the art of avionics systems and more particularly to an enhanced potable water system.

Architecture of aircraft is evolving based on application needs, customer needs, market segments and the availability of advanced technologies. In the process there are attempts to make aircraft more intelligent, more electrical and more data driven. Considering the cost of an aircraft design life cycle and operations, having modular and re-usable architecture while still maintaining robustness and reliability of the design can be a challenge.

Potable water systems (PWS) on board an aircraft are electromechanical systems that are responsible for supplying pressurized and filtered water to various outlets such as, for example, toilets, showers, sinks, beverage stations, washing stations, and the like. A potable water system on board an aircraft typically includes various equipment such as electronic interface boxes for control and monitoring, electronic temperature control, water level sensing and display devices, water pumps and air compressors, cylindrical and conformal water tank assemblies, lavatory and galley water heaters, heated supply and drain lines, control cables, system valves and heated drain masts, and the like which can be scattered throughout an aircraft.

At present, PWS are distributed throughout an aircraft and are wired systems with physical wires running from point to point and equipment to equipment for the flow of control commands and equipment status information. The PWS equipment is commanded from remote locations through an electronic interface box, cabin management system, and/or external service panel over a wired communication such as, for example, an ARINC-429 data bus or CAN data bus.

The potable water system also provides the status of various subsystems and components like valves, heaters, water levels by acquiring the data through various sensors planted at subsystem and communicating the information to the cabin management system, displays and external service panel over similar wired data buses through potable water system controller and communication interface.

The current potable water system requires the water tank to be filled to its fullest or to some discrete level zones for water consumption on board during flight. This system is manual and requires effort to fill the water including manual inspection of the indicator for gauging the water level. The quantity of water on board an aircraft needs to be regulated in order to reduce the weight with which aircraft takes off, flies and lands as higher weight leads to lesser fuel efficiency. The quantity of water needed on board an aircraft needs to meet the bare minimum quality of service and need not essentially be always present as per regulation for passengers. By considering the factors impacting the consumption and quantity of water on board an aircraft helps improve the quality of service of potable water system to meet customer requirements of water on board in flight.

The current water quality may not meet regulatory requirements. Regulatory bodies check the water quality on aircrafts only periodically and hence are unable to keep a control on the water quality every time it is supplied on aircraft while aircraft travels to different locations and PWS tanks gets filled with water. There is a need for a system that can monitor the water quality continuously during ground operations and flight and provide data associated with the water quality to entities outside the aircraft for better up keeping and prevent water contention on board an aircraft.

### BRIEF DESCRIPTION

Also disclosed is a method for operating a potable water system in an aircraft that includes determining, by a controller, flight data associated with a flight for the aircraft, determining passenger data associated with the flight, determining an estimated water consumption for the potable water system associated with the aircraft based on the passenger data, determining a water quantity value for the flight based at least in part on the flight data and the estimated water consumption, and transmitting, by the controller, a request for the water quantity value for the potable water system for the flight to a water fulfillment system.

Disclosed is a potable water system for an aircraft. The system includes one or more sensors configured to collect water data and equipment data associated with the potable water system, a controller communicatively coupled to a memory, the controller configured to determine flight data associated with a flight for the aircraft, determine passenger data associated with the flight, determine an estimated water consumption for a potable water system associated with the aircraft based on the passenger data, determine a water quantity value for the flight based at least in part on the flight data and the estimated water consumption, and transmit a request for the water quantity value for the potable water system for the flight to a water fulfillment system.

### BRIEF DESCRIPTION OF THE DRAWINGS

The following descriptions should not be considered limiting in any way. With reference to the accompanying drawings, like elements are numbered alike:
FIG. 1 is a perspective view of an aircraft that may incorporate embodiments of the present disclosure;
FIG. 2 depicts a system for managing a potable water system according to one or more embodiments;
FIG. 3a depicts a flow diagram of a method for operation of the potable water system according to one or more embodiments;
FIG. 3b depicts the method for operation of the potable water system when the aircraft is on the ground according to one or more embodiments; and
FIG. 4 depicts a flow diagram of a method for operating a potable water system in an aircraft according to one or more embodiments.

### DETAILED DESCRIPTION

A detailed description of one or more embodiments of the disclosed apparatus and method are presented herein by way of exemplification and not limitation with reference to the Figures.

Turning now to an overview of technologies that are more specifically relevant to aspects of the disclosure, current potable water systems on board an aircraft include point-to-point wires running throughout the aircraft for placement of various equipment, subsystems, sensors, controls, and water outlets at multiple locations in the aircraft. These potable water systems include issues related to configurability in that not all aircraft require additional facilities such as, for example, showers. The configurability of these systems can be difficult as customer demand drives what facilities are included which may require additional wiring needs for customer specific requirements. Other issues include modularity and rerouting issues for these potable water systems on aircraft. Modularity issues relate to the hard wiring running between different modules become difficult to augment existing equipment and/or subsystems with new equipment because new wiring needs to be laid out for attaching any new equipment. Further, rerouting of the wiring is needed for different system configurations which require additional overhead. Also, the physical wiring adds weight to the aircraft which can reduce fuel efficiency. The physical wiring also runs into issues related to common mode failure in that the wires can be susceptible to fire, vibration, structural damage, damage caused by fluid, at the like.

In addition to the issues described above, water quantity control and water quality control can be a challenge for potable water systems on an aircraft. At present, potable water systems do not have features that control the water quantity that is inlet, outlet, and used on board an aircraft to meet the quality of service for passenger requirements while at the same time optimizing the services and reducing fuel consumption (e.g., water weight). At the same time, potable water system also does not have features that monitor the quality of water on board an aircraft and perform adaptive water filtering. This includes monitoring of water quality during inlet to monitor pathogens and other water contamination or hardening issues like mineral and impurities in water supplied on board the aircraft.

Turning now to an overview of the aspects of the disclosure, one or more embodiments address the above-described challenges in the art by providing a wireless control system and associated processes for controlling the various PWS equipment and subsystems for electronic temperature control, water level sensing and display, water pumps and air compressors, cylindrical and conformal water tank assemblies, lavatory and galley water heaters, heated supply and drain lines, control cables, and system valves and heated drain masts. In addition to controlling the PWS, aspects of the wireless control system interface for communication between device control cards and aircraft cabin management systems and external service panels by utilizing transceivers to accept command and communication status. The wireless control system can communicate with the PWS equipment and devices utilizing aircraft wireless network (WAN), wireless switches, remote data concentrator, or wireless avionics intra-communications (WAIC) protocol based on arrangement available on the aircraft.

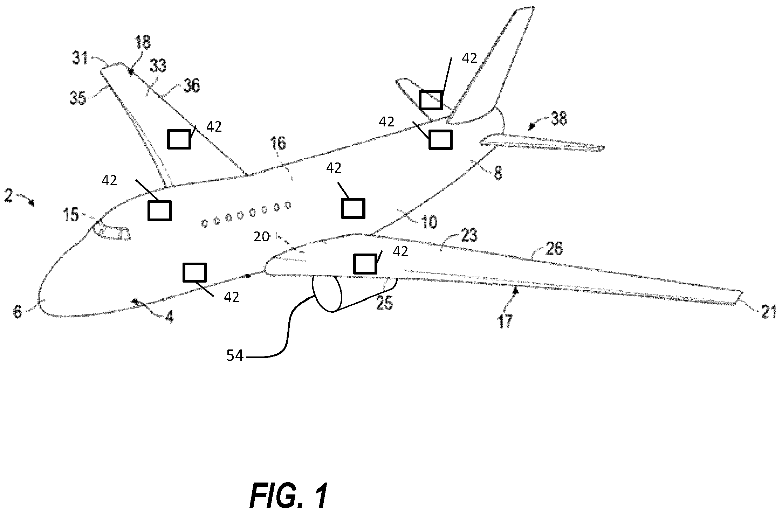

Referring now to the figures, FIG. 1 depicts a perspective view of an aircraft 2 that may incorporate embodiments of the present disclosure. Aircraft 2 includes a fuselage 4 extending from a nose portion 6 to a tail portion 8 through a body portion 10. Body portion 10 houses an aircraft cabin 14 that includes a crew compartment 15 and a passenger compartment 16. Body portion 10 supports a first wing 17 and a second wing 18. First wing 17 extends from a first root portion 20 to a first tip portion 21 through a first airfoil portion 23. First airfoil portion 23 includes a leading edge 25 and a trailing edge 26. Second wing 18 extends from a second root portion (not shown) to a second tip portion 31 through a second airfoil portion 33. Second airfoil portion 33 includes a leading edge 35 and a trailing edge 36. Tail portion 8 includes a stabilizer 38. Aircraft 2 includes an engine 54 configured to provide propulsion to the aircraft 2. In embodiments, the aircraft 2 includes a variety of PWS equipment/subsystems 42 and control system on the aircraft 2. The PWS equipment/subsystems 42 include, but are not limited to, electronic interface boxes for control and monitoring, electronic temperature control, water level sensing and display devices, water pumps and air compressors, cylindrical and conformal water tank assemblies, lavatory and galley water heaters, heated supply and drain lines, control cables, system valves and heated drain masts, and the like

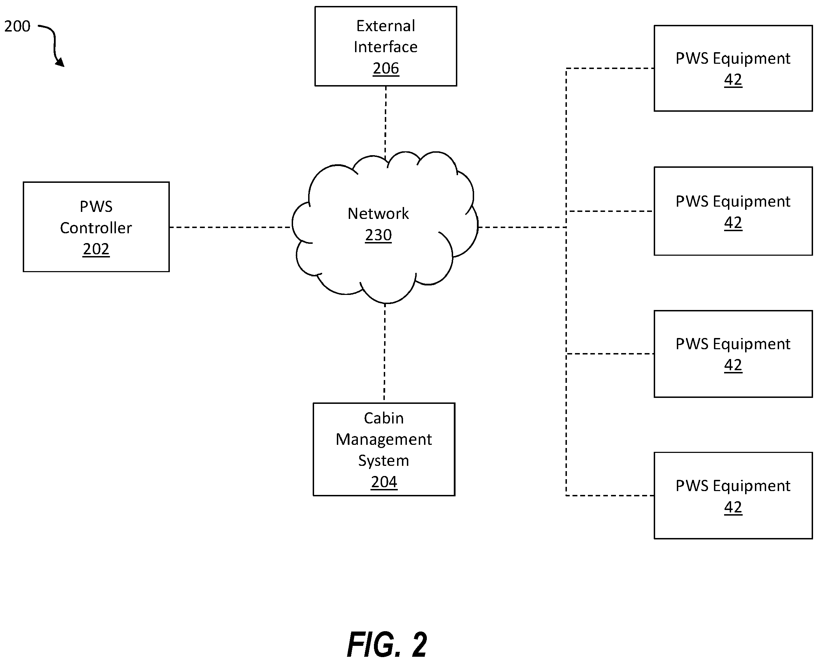

Turning now to a more detailed description of aspects of the present disclosure, FIG. 2 depicts a system for managing a potable water system according to one or more embodiments. The system 200 includes a PWS controller 202, PWS equipment 42, a cabin management system 204, and an external interface 206. The system 200 also includes a network 230 that allows each of the components of the system 200 to communicate with each other. The network 230 can be any type of wireless network such as a WiFi network, Bluetooth™, ZigBee™, WAN, RDC, WAIC, etc.

In one or more embodiments, the PWS controller 202 is configured to monitor water data on board an aircraft and take action such as, for example, control water flow by controlling one or more valves, regulating water temperature by varying the duty cycle of a heater, maintain pressurization, and the like through wireless communication through the network 230.

The PWS equipment 42 includes equipment associated with components of the potable water system as well as one or more sensors, control equipment, and wireless communication equipment (e.g., transceivers) that are configured to communicate, through one or more networks 230, with the PWS controller 202. In one or more embodiments, the one or more sensors included with the PWS equipment 42 can be fault detection and health monitoring sensors. These sensors perform monitoring of the PWS equipment 42 and provide fault and health information to the PWS controller 202. In one or more embodiments, the PWS equipment 42 provides water data (e.g., quality, quantity, temperature, etc.) associated with the PWS equipment as well as health monitoring data. In one or more embodiments, the health monitoring data can include data associated with the health of the one or more sensors associated with the PWS equipment 42. The one or more sensors for collecting and processing this water data and health monitoring data. The control equipment for the PWS equipment 42 can be utilized to control operations of the PWS equipment by operating valves, engaging heaters, and the like. The control equipment associated with the PWS equipment 42 is configured to maintain a normal mode of operation through which it controls the PWS equipment 42 by receiving commands from the PWS controller 202. However, if the communication channel over the network 230 fails, the control equipment can switch to a fail-safe mode with limited capabilities

In one or more embodiments, the control equipment associated with the PWS equipment 42 can receive power supplied from the aircraft through an aircraft level bus power supply for both AC and DC power. In addition, the control equipment performs power management and, as required, provides this power to the PWS equipment 42. In some embodiments, a control equipment hardware can control one or more PWS equipment 42 and also manage the power supply for said equipment. Also, the control equipment can maintain device identification numbers (IDs) for each PWS equipment 42 under its control. If the control equipment ever enters a hang or freeze state, the control equipment can be reset utilizing a backup control panel. In some embodiments, the control equipment for each of the PWS equipment 42 can include a display panel or some other external display.

In embodiments, the PWS controller 202, PWS equipment 42, control equipment, any of the hardware referenced in the system 200 can be implemented by executable instructions and/or circuitry such as a processing circuit and memory. The processing circuit can be embodied in any type of central processing unit (CPU), including a microprocessor, a digital signal processor (DSP), a microcontroller, an application specific integrated circuit (ASIC), a field programmable gate array (FPGA), or the like. Also, in embodiments, the memory may include random access memory (RAM), read only memory (ROM), or other electronic, optical, magnetic, or any other computer readable medium onto which is stored data and algorithms as executable instructions in a non-transitory form.

In one or more embodiments, the one or more sensors utilized for monitoring the PWS equipment 42 are responsible for data acquisition for data associated with water levels in tanks, pressure values in ducts, temperature of the water, quality of the water before and after filtration and treatment, rate of water consumption, and the like and can transmit this data through a transceiver in burst mode to the PWS controller 202 over the network 230. The one or more sensors can draw power from the aircraft through an aircraft level bus power supply for both AC and DC power or through a battery. The one or more sensors can include a memory that stores a device ID for the PWS equipment 42 and associate the collected water and health data with this device ID.

In one or more embodiments, the external interface 206 provides capabilities to control the PWS equipment 42 for re-filling of water, emptying of grey water, and various other types of maintenance activities. In some embodiments, the external interface 206 can be a tablet computer that can connect to the network 230 to communicate with the PWS equipment 42 or any other component in the system 200. Some additional activities that can be controlled by the external interface 206 include, but are not limited to, pressurized filling of water into tanks, manual filing of water into tanks, level indication sensing of the water, valve operation and heating, and the like.

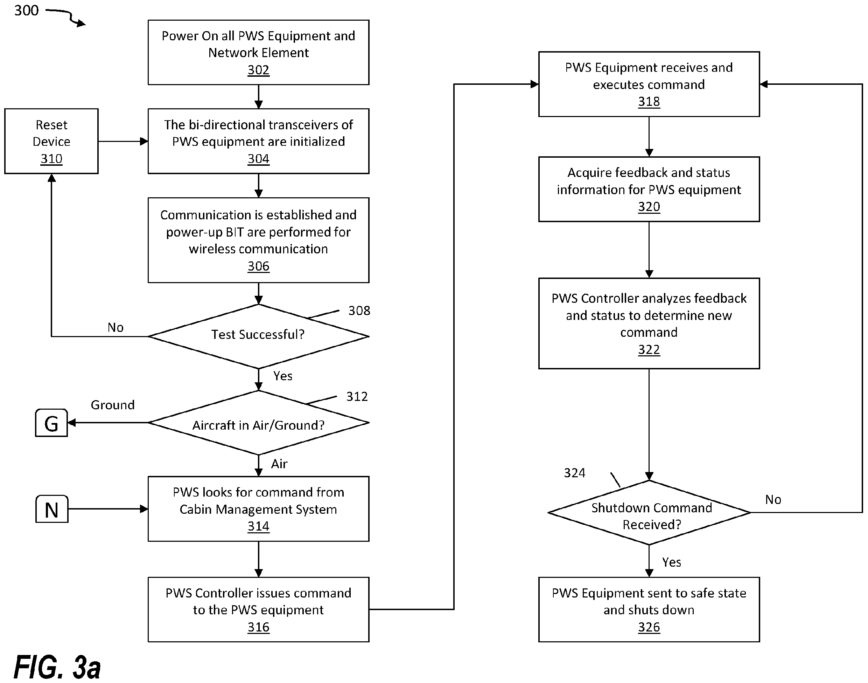

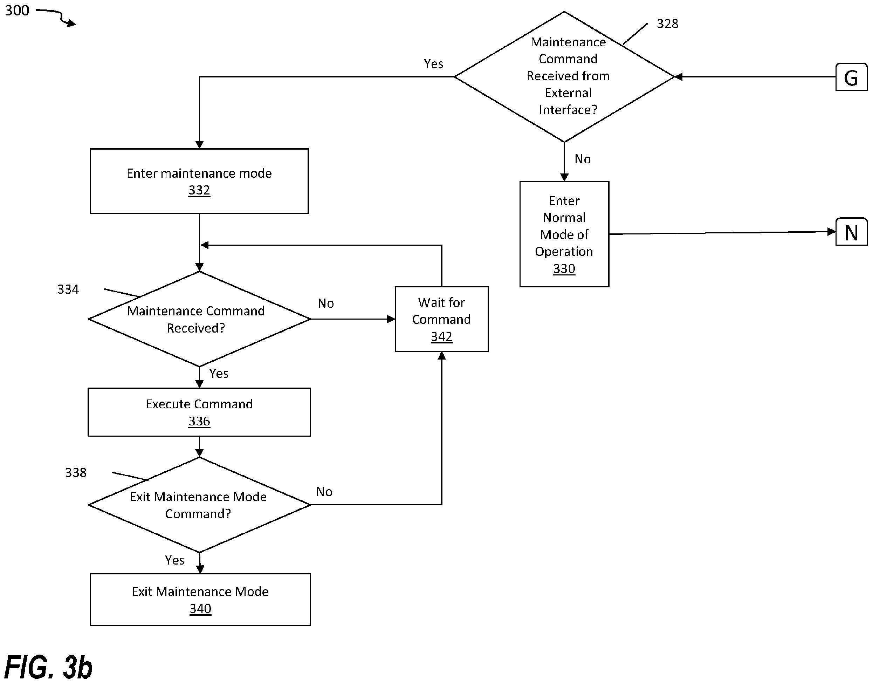

FIG. 3a depicts a flow diagram of a method for operation of the potable water system 200 according to one or more embodiments. The method 300 includes an initialization operation for all the PWS equipment 42, as shown in block 302. At block 304, the method 300 continues and checks to see if communication is active between the PWS controller 202 and the PWS equipment 42 transceivers over the network 230. After communication has been established, the method 300 includes the PWS equipment 42 and associated components (sensors, control equipment, etc.) performing built-in tests (BIT), as shown in block 306. The decision block 308 determines if the test is successful or not. If the test is not successful, the device is reset as shown in block 310 and the method 300 restarts at block 304 for the reset device (e.g., PWS equipment 42). If the test is successful, a second decision block 312 determines whether the aircraft is currently in the air or on the ground. If the aircraft is on the ground, the method 300 proceeds to block G (in FIG. 3b). However, if the aircraft is in the air, the method 300 continues to have the PWS controller 202 determine if any commands are being received from the cabin management system 204, as shown in block 314. Any commands from the cabin management system 204 are sent along from the PWS controller 202 to the PWS equipment, as shown in block 316. The PWS equipment 42 receives and executes these commands, as shown in block 318. After execution of the commands, feedback and status information is acquired from the PWS equipment 42 to determine status of the water and other metrics as well as health information associated with the PWS equipment. The PWS controller 202 collects and analyzes this feedback and status data to determine if a new command is needed, as shown at block 322. The decision block 324 determines if the PWS equipment has received a shutdown command. If no shutdown command is received, the PWS equipment 42 continues to receive and execute commands from the PWS controller 202 as shown in block 318. However, if the shutdown command is received, the PWS equipment 42 is sent to a safe state and then shut down, as shown at block 326.

FIG. 3b depicts the method for operation of the potable water system when the aircraft is on the ground according to one or more embodiments. The method includes block G which establishes that the aircraft is on the ground from FIG. 3a decision block 312. The method 300 proceeds to decision block 328 which determines whether a maintenance command is received from the external interface 206. If not, the method 300 proceeds to normal operation mode as shown at block 330 and returns to the method steps in FIG. 3a. If a maintenance command is received, the method 300 proceed to block 332 where the system 200 enters maintenance mode. Decision block 334, determines what maintenance commands are received and once received (e.g., "Yes"), the method 300 includes executing the maintenance command, as shown at block 336. If not, the method 300 includes the system 200 awaiting maintenance commands, as shown at block 342. The method 300 continues to wait for maintenance commands until an exit maintenance mode command is received, as shown in decision block 338. Once the command to exit maintenance mode is received, the system 200 will exit as shown at block 340.

In one or more embodiments, the system 200 is configured to determine the quantity of water that will exceed or meet the quality services defined for the potable water system on the aircraft. As mentioned above, the inclusion of too much water can add extra, unneeded weight to the aircraft which in turn affects fuel efficiency and aircraft range. The system 200 considers the following parameters when calculating the quantity of water for initial upload of the water for when the aircraft is on ground and then continues to monitor and operate the supply control and drainage to meet inflight water requirements for quality of service. These parameters include the number of passengers booked for the flight and which flight class the passengers are booked in (e.g., business class, first class, etc.). For some aircraft, first class and business class passengers may have additional access to water facilities during the flight such as private lavatories and showers, for example. Some additional parameters for determining and optimizing water quantity for the aircraft include the types and number of water consumption facilities such as lavatories, sinks, showers, and galleys. Other parameters include the configuration of the connection of the potable water system tanks to consumption facilities and outlets for consumption. Aircraft and flight characteristics can also be utilized for calculation of water quantity such as, for example, origin/destination of the flight, departure time, arrival time, and travel time, type and size of the aircraft, existing water tanks, real-time collected water consumption, historical water consumption, drainage characteristics for any scheduled stops, and also the accuracy of the water quantity sensing equipment.

In one or more embodiments, the PWS controller 202 communicated with other aircraft systems (e.g., cabin management system 204) to determine the above mentioned characteristics about the aircraft and upcoming flights including number of passengers, passenger type/class, and flight duration. These characteristics are utilized, in addition to real time monitoring, to optimize water consumption on the flight based on the optimized quantity of water initially included with the aircraft. Any type of optimization algorithm can be utilized for calculating the water quantity of the aircraft.

In one or more embodiments, the PWS controller calculates the water quantity needed for a flight of an aircraft and communicates this water quantity need to a maintenance personnel or to a water fulfillment system to schedule the same quantity of water to be inlet into the tanks on board the aircraft. The PWS controller 202 communicates with sensors associated with the water tanks (e.g., PWS equipment 42) to sense and monitor the water level in each tank. This water level information can be displayed on a display device associated with the PWS controller 202 to aircraft crew and/or maintenance personnel. As the water is being filled, the PWS controller 202 can monitor and transmit a status to the maintenance crew or the flight crew. The status can be "completed" status or an "incomplete" status to indicate whether the water level matches or exceeds the water quantity needed for the flight. The incomplete status can restrict the aircraft from taking off before filling the water to an appropriate quantity and avoiding any shortage during the flight, for example. During a flight, the PWS controller 202 monitors through the sensors associated with the PWS equipment 42 the water levels and the total water consumption on the flight. Based on current water consumption as well as historic water consumption on the aircraft, the PWS controller 202 can estimate the remaining water consumption for the remaining of the flight journey. Should the estimated water consumption be less than the current water level, the PWS controller 202 can regulate the water supply by controlling water outlet valves and compressors for water pressure to reduce water consumption. In addition, the PWS controller 202 can notify any flight crew on the aircraft of the water level and estimated consumption so that they may take one or more corrective actions.

In one or more embodiments, the PWS controller 202 can determine an excess of water based on the current water level in the tanks and the estimated water consumption. Also, the PWS controller 202 can communicate with the cabin management system 204 or other systems on the aircraft to determine a status of the flight and the remaining flight duration. Based on this information, the excess water can be dumped from the water tanks through opening of the safe outflow valves on the air craft by the PWS controller 202. This removal of the excess water from the tanks by the PWS controller 202 can reduce flight weight and fuel consumption. The water consumption data monitored for each flight by the PWS controller 202 can be stored in a memory for later access for estimated water consumption (e.g., historic water consumption data). This historic water consumption data can be associated with the other characteristics (flight duration, passenger number/type/class, etc.) to better estimate future flights having similar characteristics. The aforementioned parameters for calculating water quantity can continuously be updated as more data is collected and learning algorithms can be utilized for better estimation and optimization of water quantity for future flights.

In one or more embodiments, the PWS controller 202 can monitor the water quality on board an aircraft utilizing sensors during water inlet operation and during water distribution on board the aircraft. Water quality control measures, by the PWS controller 202, can be enacted utilizing liquid disinfectant mixers, filtering cartridges, and UV lamps, for example. One or more sensors associated with the PWS equipment 42 (e.g., tanks and valves, etc.) can be utilized for real-time monitoring of the water quality. Should any hazardous condition be detected or if water quality is below a threshold water quality level/value, the PWS controller 202 can operate the PWS equipment 42 to shut down or shut off access to the water. In addition, a water outlet valve can be opened to drain the tank or location where the hazardous or low quality water is stored. Also, a disinfectant can be mixed in the tank that stored the hazardous or low quality water. Any water quality issues and associated remedies/actions taken can be stored in the memory associated with the PWS controller 202 for later reporting to a maintenance crew or any other personnel. This historical water quality can be analyzed later to determine a problematic source of contaminated water. For example, if water quality issues arise from a certain airport or with a certain terminal, the aircraft can notify the airport to remedy the water quality when loading the water into the aircraft. In some embodiments, the PWS controller 202 can notify the flight crew of the water quality issue and before taking actions, the PWS controller 202 can receive an override command from the flight crew to not take any actions. For example, if the water quality issue is minor and the flight duration is longer flight, a flight crew may wish to take other actions besides draining the tank. In some embodiments, the water with the quality issue can be rerouted to facilities for use.

In one or more embodiments, the water in the PWS system is susceptible for having high PH, TDS, catching pathogens, oxidation, calcification, hardening when it in running inside the PWS pipeline from tank to outlet valves based on quality of water that was inlet. Hence, the system 200 described herein, includes additional water quality control equipment like disinfectant mixer, particle filter, UV Chamber and sensor systems like PH, TDS, hardening and calcification to detect the degradation in water quality since inlet continuously during flight. These water quality equipment is included with the PWS equipment 42. These water equipment are added either in series or in parallel based on aircraft's need. Each of the equipment operates by receiving command from PWS controller 202 and provides status to PWS controller 202 to be stored in memory for later analytics on system and water quality. Sensors can detect anomalies in water quality which are logged in the memory. In one or more embodiments, the system 200 can generate an alarm for the crew when lower quality of water is detected.

In one or more embodiments, the external interface 206 can be used by maintenance personnel/airliner/pilot/crew contains application to retrieve the data from past, the data of water inlet and data of water outlet from their storage location like memory of the PWS controller 202, airport infrastructure, airliner network to perform comparison and analytics and provides detailed report on the functioning of the PWS quality control of the water. The application compares the data from inlet water quality and outlet water quality to provide report for the maintenance required in the PWS system.

In one or more embodiments, water sampling timing is software configurable in the system 200 based on parameters set for the aircraft for quality control. The data that is collected is marked with aircraft information, date and time in order for the maintenance or other personnel to take appropriate action for the airline and aircraft. The water disinfecting equipment, particle filters and UV Lamp Chamber contains sensors to detect the correct functioning of the equipment. These sensors monitor their respective equipment continuously and provide the data to the PWS controller 202. In case of any degradation or drift beyond acceptable limits are flashed to the maintenance personnel, cabin crew of their portable electronic device and alerts for replacement of the components and equipment. The system 200 also monitors the water flow rate for detecting the congestion and alerts the maintenance personnel about any impending blockage conducive to pathogens generation.

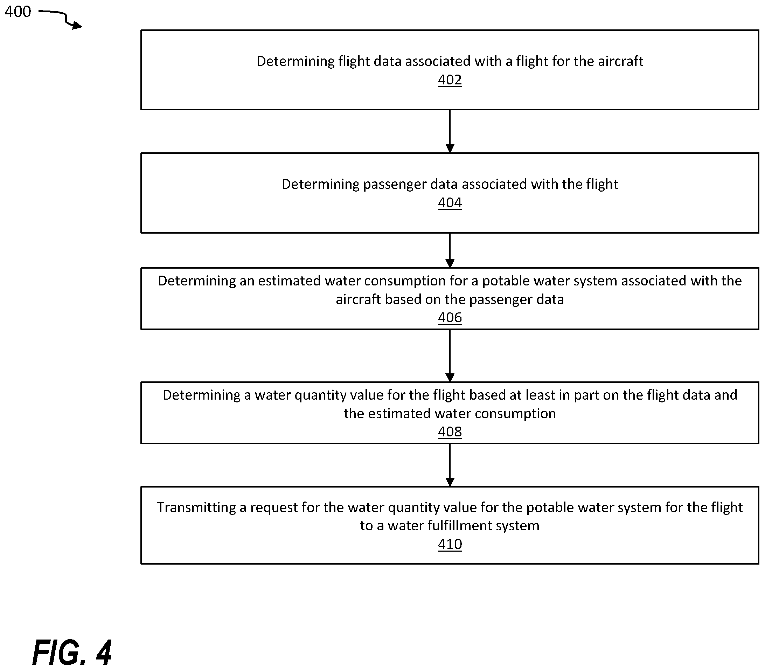

FIG. 4 depicts a flow diagram of a method for operating a potable water system in an aircraft according to one or more embodiments. The method 400 includes determining flight data associated with a flight for the aircraft, as shown in block 402. The flight data includes flight duration, flight departure time, flight arrival time, and the like. In addition, flight data can include information on the aircraft such as PWS equipment (tanks, etc.) and the number of potable water system outlets in the form of sinks, lavatories, galleys, and the like. At block 404, the method 400 includes determining passenger data associated with the flight. Passenger data includes number of passengers, class data associated with the passengers (business, economy, etc.), and historical passenger data including water consumption data for the different class types or the number of passengers on board. Also, the method 400, at block 406, includes determining an estimated water consumption for a potable water system associated with the aircraft based on the passenger data. The method 400, then, includes determining a water quantity value for the flight based at least in part on the flight data and the estimated water consumption, as shown at block 408. The water quantity value can be a total volume measured in gallons and the like. And at block 410, the method 400 includes transmitting a request for the water quantity value for the potable water system for the flight to a water fulfillment system. The water fulfillment system can be a system utilized by a ground crew to fulfil the water needs for the aircraft.

Additional processes may also be included. It should be understood that the processes depicted in FIG. 4 represent illustrations and that other processes may be added or existing processes may be removed, modified, or rearranged without departing from the scope of the invention as defined by the claims.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A method for operating a potable water system in an aircraft, the method comprising:
determining, by a controller (202), flight data associated with a flight for the aircraft (2);
determining passenger data associated with the flight;
determining an estimated water consumption for the potable water system (42) associated with the aircraft based on the passenger data;
determining a water quantity value for the flight based at least in part on the flight data and the estimated water consumption; and
transmitting, by the controller, a request for the water quantity value for the potable water system for the flight to a water fulfillment system.

2. The method of Claim 1, further comprising:
receiving, from the water fulfillment system, water for the potable water system;
monitoring, by one or more sensors, a water quantity for the potable water system; and
transmitting a completed status based at least on a determination that the water quantity for the potable water system is at least the water quantity value.

3. The method of Claim 2, further comprising:
transmitting an incomplete status based at least on a determination that the water quantity for the potable water system is less than the water quantity value.

4. The method of Claim 2, further comprising:
monitoring water consumption during the flight for the aircraft to determine the water quantity in the potable water system;
analyzing the water consumption to determine a water consumption rate for the flight;
analyzing one or more parameters of the flight to determine a remaining flight duration;
determining a water quantity need for the flight based on the remaining flight duration and the water consumption rate; and
operating the potable water system to conserve water based at least on a determination that the water quantity need exceeds the water quantity in the potable water system.

5. The method of Claim 4, further comprising:
operating the potable water system to evacuate water based at least on a determination that the water quantity in the potable water system exceeds the water quantity need.

6. The method of Claim 4 OR 5, wherein operating the potable water system to conserve water comprises adjusting a water flow rate from a water tank associated with the potable water system.

7. The method of Claim 2, further comprising:
monitoring, by one or more sensors, water quality of the water in the potable water system;
enacting, utilizing one or more water quality devices, a water quality remedial action based at least in part on a determination that the water quality is below a threshold quality value, and optionally further comprising transmitting an alert based on the determination that the water quality is below a threshold quality value.

8. The method of any preceding Claim, wherein the flight data comprises at least one of departure time, arrival time, and flight time, and/or wherein the passenger data comprises at least one of a number of passengers, class type of passengers, and historical water consumption data.

9. The method of any preceding Claim, wherein the request for the water quantity value for the potable water system for the flight to the water fulfillment system is transmitted over a wireless network (230).

10. A potable water system for an aircraft comprising:
one or more sensors configured to collect water data and equipment data associated with the potable water system, wherein the equipment data comprises system health information;
a controller (202) communicatively coupled to a memory, the controller configured to:
determine flight data associated with a flight for the aircraft;
determine passenger data associated with the flight;
determine an estimated water consumption for a potable water system associated with the aircraft based on the passenger data;
determine a water quantity value for the flight based at least in part on the flight data and the estimated water consumption; and
transmit a request for the water quantity value for the potable water system for the flight to a water fulfillment system.

11. The potable water system of Claim 10, wherein the controller is further configured to:
receive, from the water fulfillment system, water for the potable water system;
monitor, by one or more sensors, a water quantity for the potable water system;
transmit a completed status based at least on a determination that the water quantity for the potable water system is at least the water quantity value, and optionally wherein the controller is further configured to:
transmit an incomplete status based at least on a determination that the water quantity for the potable water system is less than the water quantity value.

12. The potable water system of Claim 10 or 11, wherein the controller is further configured to:
monitor water consumption during the flight for the aircraft to determine the water quantity in the potable water system;
analyze the water consumption to determine a water consumption rate for the flight;
analyze one or more parameters of the flight to determine a remaining flight duration;
determine a water quantity need for the flight based on the remaining flight duration and the water consumption rate;
operate the potable water system to conserve water based at least on a determination that the water quantity need exceeds the water quantity in the potable water system.

13. The potable water system of Claim 12, wherein the controller is further configured to:
operate the potable water system to evacuate water based at least on a determination that the water quantity in the potable water system exceeds the water quantity need.

14. The potable water system of Claim 12 or 13, wherein operating the potable water system to conserve water comprises adjusting a water flow rate from a water tank associated with the potable water system.

15. The potable water system of any of Claims 10 to 14, wherein the controller is further configured to:
monitor, by the one or more sensors, water quality of the water in the potable water system;
enact, utilizing one or more water quality devices, a water quality remedial action based at least in part on a determination that the water quality is below a threshold quality value, and optionally wherein the controller is further configured to transmit an alert based on the determination that the water quality is below a threshold quality value.
